# EUROPÄISCHE PATENTSCHRIFT

(11) **EP 2 805 396 B1**
(45) Veröffentlichungstag und Bekanntmachung des Hinweises auf die Patenterteilung: **07.08.2019**
(21) Anmeldenummer: 13700315.8
(22) Anmeldetag: 16.01.2013
(51) Int. Cl.: B60R 16/03, H02J 1/08, H02J 7/14, B60L 50/15, B60L 50/16, B60L 58/20, H02J 1/00

(54) **BORDNETZ**
VEHICLE ELECTRIC SYSTEM
RÉSEAU DE BORD

(30) Priorität: 20.01.2012 DE 102012200804
(43) Veröffentlichungstag der Anmeldung: 26.11.2014
(73) Patentinhaber: Continental Automotive GmbH, 30165 Hannover (DE)
(72) Erfinder: REICHOW, Dirk, 93173 Wenzenbach (DE); LEITHERER, Michael, 93049 Regensburg (DE)
(86) Internationale Anmeldenummer: PCT/EP2013/050751
(87) Internationale Veröffentlichungsnummer: WO 2013/107774

(56) Entgegenhaltungen:
- EP-A2- 1 137 150
- WO-A2-03/105330
- DE-A1-102008 031 270
- DE-A1-102010 029 788
- DE-B3- 10 256 704
- DE-T5- 10 392 456

## Beschreibung

Die Anmeldung betrifft ein Bordnetz für ein Fahrzeug.

Aus der DE 10 2010 029 788 A1 ist ein Bordnetz für ein Kraftfahrzeug bekannt, das einen ersten Bordnetzzweig und zumindest einen zweiten Bordnetzzweig umfasst. Der erste Bordnetzzweig weist einen ersten Energiespeicher mit einem ersten Stromanschluss und einem zweiten Stromanschluss auf. Ferner weist der erste Bordnetzzweig einen Generator und mindestens einen ersten Verbraucher auf. Der zweite Bordnetzzweig weist einen zweiten Energiespeicher mit einem ersten Stromanschluss und einem zweiten Stromanschluss auf. Des Weiteren weist der zweite Bordnetzzweig zumindest einen zweiten Verbraucher auf, der mit dem ersten Stromanschluss des zweiten Energiespeichers und/oder mit dem ersten Stromanschluss des ersten Energiespeichers elektrisch koppelbar ist. Ferner weist der zweite Bordnetzzweig einen Energieflusssteller auf mit einem ersten Stromanschluss und einem zweiten Stromanschluss, wobei der zweite Stromanschluss des Energieflussstellers elektrisch gekoppelt ist mit dem ersten Stromanschluss des zweiten Energiespeichers und der erste Stromanschluss des Energieflussstellers elektrisch koppelbar ist mit dem ersten Stromanschluss des ersten Energiespeichers.

Aus der WO 03/105330 A2 ist ein Bordnetz bekannt, das mindestens zwei Energiespeicher umfasst, wobei ein erster Energiespeicher in einem Starterteilkreis mit einem Starter zum Anlassen eines Motors verbunden ist, und ein zweiter Energiespeicher in einem Verbraucherteilkreis mit einem Verbraucher verbunden ist. Der Starterteilkreis ist über ein Koppelelement mit dem Verbraucherteilkreis verbunden.

Aus der DE 102 56 704 B3 ist eine elektrische Schaltung mit einem aus mehreren Speicherelementen bestehenden elektrischen Energiespeicher und einer Ladungsausgleichsschaltung zum Ladungsausgleich zwischen den einzelnen Speicherelementen des Energiespeichers bekannt.

Aus der DE 10 2008 031270 A1 ist ein Steuergerät bekannt, das einen Spannungswandler umfasst, der eine Eingangsspannung nach oben oder nach unten zu einer Ausgangsspannung wandeln kann. Das Steuergerät umfasst ferner eine Überwachungseinrichtung, die überwacht, ob Signale in Abhängigkeit von der Funktionsfähigkeit des Spannungswandlers empfangen werden. Außerdem umfasst das Steuergerät ein Schaltelement, das durch die Überwachungseinrichtung derart angesteuert wird, dass das Schaltelement die Eingangsspannung direkt zur Ausgangsspannung durchschaltet, wenn die Überwachungseinrichtung kein Signal empfängt.

Aus der DE 103 92 456 T5 ist eine Anordnung zur Steuerung einer mehrphasigen elektrischen Maschine bekannt.
Aus der EP 1 137 150 A2 ist ein Zwei-Batteriensystem für ein Fahrzeug bekannt.

Aufgabe der Anmeldung ist es, eine Möglichkeit zu einer weiter verbesserten Spannungsstabilisierung bei einem Bordnetz eines Fahrzeugs bereitzustellen.

Diese Aufgabe wird mit dem Gegenstand der unabhängigen Ansprüche gelöst. Vorteilhafte Weiterbildungen ergeben sich aus den abhängigen Ansprüchen.

Gemäß einem ersten Aspekt der Anmeldung wird ein Bordnetz für ein Fahrzeug bereitgestellt. Das Bordnetz weist einen ersten Bordnetzzweig auf, wobei der erste Bordnetzzweig einen ersten, dynamischen elektrischen Verbraucher aufweist. Zudem weist das Bordnetz einen zweiten Bordnetzzweig auf, wobei der zweite Bordnetzzweig einen zweiten, sensitiven elektrischen Verbraucher aufweist. Zwischen dem ersten und dem zweiten Bordnetzzweig umfasst das Bordnetz ferner eine erste steuerbare Schalteinrichtung, die ausgeführt ist,
- einen ersten, nur in einer ersten Stromflussrichtung von dem ersten Bordnetzzweig zu dem zweiten Bordnetzzweig unidirektional stromleitenden Schalzustand, oder
- einen zweiten, sowohl in der ersten Stromflussrichtung als auch in einer zweiten Stromflussrichtung von dem zweiten Bordnetzzweig zu dem ersten Bordnetzzweig bidirektional stromleitenden Schaltzustand,
einzunehmen.

Ferner umfasst das Bordnetz einen ersten Energiespeicher in dem ersten Bordnetzzweig und zwischen dem ersten Bordnetzzweig und dem zweiten Bordnetzzweig ferner einen DC/DC-Wandler und eine zweite steuerbare Schalteinrichtung in einer Reihenschaltung parallel zu der ersten Schalteinrichtung. Dabei ist der DC/DC-Wandler zum Aufladen des ersten Energiespeichers des ersten Bordnetzzweigs mit Strom von dem zweiten Bordnetzzweig und/oder umgekehrt ausgeführt. Die zweite Schalteinrichtung ist ausgeführt,
- einen ersten, nur in einer ersten Stromflussrichtung von dem zweiten Bordnetzzweig zu dem ersten Bordnetzzweig unidirektional stromleitenden Schaltzustand, oder
- einen zweiten, sowohl in der ersten Stromflussrichtung als auch in einer zweiten Stromflussrichtung von dem ersten Bordnetzzweig zu dem zweiten Bordnetzzweig bidirektional stromleitenden Schaltzustand,
einzunehmen.

Außerdem umfasst das Bordnetz einen dritten Bordnetzzweig. Dabei weist der dritte Bordnetzzweig einen dritten Energiespeicher auf. Zwischen dem DC/DC-Wandler und dem dritten Bordnetzzweig weist das Bordnetz zudem eine dritte steuerbare Schalteinrichtung auf, die ausgeführt ist,
- einen ersten, nur in einer ersten Stromflussrichtung von dem dritten Bordnetzzweig zu dem DC/DC-Wandler unidirektional stromleitenden Schalzustand, oder
- einen zweiten, sowohl in der ersten Stromflussrichtung als auch in einer zweiten Stromflussrichtung von dem DC/DC-Wandler zu dem dritten Bordnetzzweig bidirektional stromleitenden Schaltzustand,
einzunehmen.

Ein dynamischer elektrischer Verbraucher bedeutet in der vorliegenden Anmeldung einen dynamischen Hochstromverbraucher, wie zum Beispiel Starter eines Verbrennungsmotors des Fahrzeugs. Ein derartiger Hochstromverbraucher zeichnet sich dadurch, dass dieser unregelmäßig eine vergleichsweise große Menge an elektrischer Energie verbraucht und somit Spannungsschwankungen im Bordnetz verursachen kann, was wiederum eine fehlerfreie Funktion eines sensitiven elektrischen Verbrauchers im Bordnetz gefährden kann.

Ein sensitiver elektrischer Verbraucher bedeutet in der vorliegenden Anmeldung einen Stromverbraucher, wie zum Beispiel ABS (Antiblockierungssystem) oder Abblendlicht, der vergleichsweise anfällig für die Spannungsschwankungen in dem Bordnetz ist und daher vor den Spannungsschwankungen in dem Bordnetz geschützt werden muss.

Durch eine getrennte Anordnung des sensitiven Verbrauchers von dem dynamischen Verbraucher in einem separaten Bordnetzzweig und die Anordnung der ersten Schalteinrichtung zwischen dem sensitiven Verbraucher und dem dynamischen Verbraucher, die Stromfluss von dem zweiten Bordnetzzweig, in dem der sensitive Verbraucher angeordnet ist, von dem ersten Bordnetzzweig, in dem der dynamische Verbraucher angeordnet ist, nur bei Bedarf und durch gesteuertes Schließen der ersten Schalteinrichtung hergestellt, lässt sich der sensitive Verbraucher vor Stromschwankungen und insbesondere vor einem Spannungsabfall in dem ersten Bordnetzzweig noch wirksamer schützen. Ein weiterer Vorteil besteht darin, dass in dem zweiten Bordnetzzweig eine Nennspannung aufgebaut werden kann, die höher als die Nennspannung in dem ersten Bordnetzzweig ist.

Durch den zweiten Strompfad bestehend aus dem DC/DC-Wandler und der zweiten Schalteinrichtung lässt sich der erste Bordnetzzweig mit Strom von dem zweiten Bordnetzzweig stabilisieren, ohne dabei gefährliche Spannungsschwankungen in dem zweiten Bordnetzzweig eintreten. Das Bordnetz gemäß der genannten Ausführungsform ermöglicht somit eine weiter verbesserte Spannungsstabilisierung in dem zweiten Bordnetzzweig bei unterschiedlichen Betriebszuständen des Fahrzeugs. Dies ermöglicht einen verbesserten Betrieb von sensitiven elektrischen Verbrauchern insbesondere innerhalb des zweiten Bordnetzzweigs.

Der dritte Bordnetzzweig mit einem dritten Energiespeicher dient als zusätzliche Stromquelle für den ersten Bordnetzzweig bzw. für den ersten dynamischen Verbraucher in dem ersten Bordnetzzweig und stabilisiert bei Bedarf die Spannung in dem ersten Bordnetzzweig.

Die Spannungsstabilisierung wird dabei insbesondere durch das Vorsehen des DC/DC-Wandlers und der ersten, zweiten und dritten Schalteinrichtung ermöglicht, wie im Folgenden näher erläutert wird. Weiterhin ermöglicht die genannte Ausführungsform eine verbesserte Redundanz und Verfügbarkeit und somit eine erhöhte funktionale Sicherheit des Bordnetzes. Ferner können der Generator sowie der erste und zweite Energiespeicher in kleinere Leistungsklassen projektiert werden, womit insbesondere ein Kostenvorteil verbunden ist.

In noch einer weiteren bevorzugten Ausgestaltung des Bordnetzes ist der DC/DC-Wandler ferner ausgeführt, den ersten Energiespeicher des ersten Bordnetzzweigs mit Strom von dem dritten Energiespeicher des dritten Bordnetzzweigs und/oder umgekehrt aufzuladen. Vorteilhafterweise ist der DC/DC-Wandler als Synchronwandler ausgebildet. Damit kann ein Energieübertrag zwischen dem ersten Bordnetzzweig, dem zweiten Bordnetzzweig und dritten Bordnetzzweig, insbesondere für die Spannungsstabilisierung in dem ersten Bordnetzzweig, in einfacher Weise ermöglicht werden.

In noch einer weiteren bevorzugten Ausgestaltung des Bordnetzes umfasst zumindest eine von der ersten, der zweiten und der dritten Schalteinrichtung einen Halbleitertransistor und eine Diode in einer Parallelschaltung. Vorzugsweise umfasst die zumindest eine Schalteinrichtung einen MOSFET-Schalter (Metall-Oxid-Halbleiter-Feldeffekt-Transistor) mit einer Body-Diode.

In einer weiteren bevorzugten Ausgestaltung des Bordnetzes ist der erste Verbraucher als ein Starter zum Starten eines Verbrennungsmotors des Fahrzeugs ausgebildet.

In noch einer weiteren bevorzugten Ausgestaltung des Bordnetzes ist der DC/DC-Wandler als ein steuerbarer bidirektionaler Gleichstromwandler ausgebildet.

Der DC/DC-Wandler, die erste Schalteinrichtung, die zweite Schalteinrichtung und die dritte Schalteinrichtung sind bevorzugt Bestandteil einer Steuervorrichtung. Dabei können die genannten Komponenten in einem einzigen Modul in Form der Steuervorrichtung bereitgestellt werden.

Das Bordnetz umfasst zudem bevorzugt eine erste Ansteuereinheit, die zum Ansteuern der ersten Schalteinrichtung ausgebildet ist, eine zweite Ansteuereinheit, die zum Ansteuern der zweiten Schalteinrichtung ausgebildet ist, eine dritte Ansteuereinheit, die zum Ansteuern der dritten Schalteinrichtung ausgebildet ist, und eine vierte Ansteuereinheit, die zum Ansteuern des DC/DC-Wandlers ausgebildet ist. Dabei sind die erste Ansteuereinheit, die zweite Ansteuereinheit, die dritte Ansteuereinheit und die vierte Ansteuereinheit Bestandteil der Steuervorrichtung.

Der Generator kann Bestandteil des ersten Bordnetzzweigs oder des dritten Bordnetzzweigs sein. Dabei ist für einen sicheren Bordnetzbetrieb mit Generator entscheidend, dass dieser mit mindestens einem Energiespeicher, das heißt mit mindestens einem des ersten Energiespeichers und des zweiten Energiespeichers, elektrisch verbunden ist, um eine Bordnetzkollabierung zuverlässig zu vermeiden, bei der der dynamische Verbrachter mehr Energie benötigt, als der Generator liefern kann. Dies wird mittels des Bordnetzes gemäß der Anmeldung in zuverlässiger Weise ermöglicht, wie im Folgenden näher erläutert wird.

Der erste Energiespeicher ist beispielsweise als Bleisäure-Akkumulator oder als Li-Ionen-Akkumulator ausgebildet. Der zweite Energiespeicher ist beispielsweise ausgewählt aus der Gruppe, bestehend aus zumindest einem Kondensator, insbesondere zumindest einem Doppelschichtkondensator, und zumindest einem Akkumulator, insbesondere zumindest einem Li-Ionen-Akkumulator.

In einer weiteren Ausgestaltung des Bordnetzes weist der dritte Bordnetzzweig zudem einen dritten elektrischen Verbraucher auf, der mit dem zweiten Energiespeicher elektrisch gekoppelt bzw. elektrisch leitend verbunden ist. Dieser dritte Verbraucher kann ebenfalls ein sensitiver Verbraucher sein, der durch die erste, zweite und dritte Schalteinrichtung vor den möglichen Spannungsschwankungen in dem ersten Bordnetzzweig wirksam geschützt ist.

Gemäß einem zweiten Aspekt der Anmeldung wird eine Vorrichtung zum Steuern eines Bordnetzes eines Fahrzeugs bereitgestellt. Dabei weist die Vorrichtung einen ersten Stromanschluss zur elektrischen Verbindung zu einem ersten, einen dynamischen elektrischen Verbraucher aufweisenden Bordnetzzweig, einen zweiten Stromanschluss zur elektrischen Verbindung zu einem zweiten, einen sensitiven elektrischen Verbraucher aufweisenden Bordnetzzweig, auf. Zwischen dem ersten und dem zweiten Stromanschluss umfasst die Vorrichtung eine erste steuerbare Schalteinrichtung, die ausgeführt ist,
- einen ersten, nur in einer ersten Stromflussrichtung von dem ersten Stromanschluss zu dem zweiten Stromanschluss unidirektional stromleitenden Schaltzustand, oder
- einen zweiten, sowohl in der ersten Stromflussrichtung als auch in einer zweiten Stromflussrichtung von dem zweiten Stromanschluss zu dem ersten Stromanschluss bidirektional stromleitenden Schaltzustand,
einzunehmen.

Ferner umfasst die Vorrichtung zwischen dem ersten und dem zweiten Stromanschluss ferner einen DC/DC-Wandler und eine zweite steuerbare Schalteinrichtung in einer Reihenschaltung parallel zu der ersten Schalteinrichtung. Dabei ist der DC/DC-Wandler zum Umwandeln eines zweiten, an dem zweiten Stromanschluss anliegenden Spannungspotentials auf ein erstes Spannungspotential an dem ersten Stromanschluss und/oder umgekehrt ausgeführt. Die zweite Schalteinrichtung ist ausgeführt:
- einen ersten, nur in einer ersten Stromflussrichtung von dem zweiten Stromanschluss zu dem ersten Stromanschluss unidirektional stromleitenden Schalzustand, oder
- einen zweiten, sowohl in der ersten Stromflussrichtung als auch in einer zweiten Stromflussrichtung von dem ersten Stromanschluss zu dem zweiten Stromanschluss bidirektional stromleitenden Schaltzustand,
- einzunehmen.

Außerdem umfasst die Vorrichtung einen dritten Stromanschluss zur elektrischen Verbindung zu einem dritten Bordnetzzweig. Dabei weist der dritte Bordnetzzweig vorzugsweise einen dritten Energiespeicher auf. Zwischen dem DC/DC-Wandler und dem dritten Stromanschluss weist die Vorrichtung außerdem eine dritte steuerbare Schalteinrichtung auf, die ausgeführt ist,
- einen ersten, nur in einer ersten Stromflussrichtung von dem dritten Stromanschluss zu dem DC/DC-Wandler unidirektional stromleitenden Schalzustand, oder
- einen zweiten, sowohl in der ersten Stromflussrichtung als auch in einer zweiten Stromflussrichtung von dem DC/DC-Wandler zu dem dritten Stromanschluss bidirektional stromleitenden Schaltzustand,
einzunehmen.

Gemäß einem dritten Aspekt der Anmeldung wird ein Fahrzeug mit einem oben beschriebenen Bordnetz bereitgestellt. Vorzugsweise weist das Fahrzeug ferner eine oben beschriebene Vorrichtung zum Steuern des Bordnetzes auf.

Zudem weist das Fahrzeug bevorzugt ein Start/Stopp-System auf, das zum automatischen und/oder manuellen Abschalten bzw. Starten eines Verbrennungsmotors des Fahrzeugs ausgebildet ist.

Ferner betrifft die Anmeldung ein Verfahren zum Betreiben eines Bordnetzes gemäß einer der oben genannten Ausgestaltungen. Das Verfahren weist dabei folgende Schritte auf. Es erfolgt ein Bestimmen eines Betriebszustands des Fahrzeugs. Zudem erfolgt ein Erzeugen von Ansteuersignalen zum Ansteuern der ersten Schalteinrichtung, der zweiten Schalteinrichtung, der dritten Schalteinrichtung und des DC/DC-Wandlers in Abhängigkeit des bestimmten Betriebszustands des Fahrzeugs.

Das Bestimmen des Betriebszustands des Fahrzeugs kann dabei ein Ermitteln des Betriebszustands beispielsweise basierend auf zumindest einem erfassten Parameter des Fahrzeugs oder zumindest einer Komponente des Fahrzeugs und/oder ein Vorgeben des Betriebszustands beispielsweise durch eine Nutzeranforderung oder Nutzereingabe beinhalten.

Das Fahrzeug und das Verfahren gemäß der Anmeldung weisen die bereits im Zusammenhang mit dem Bordnetz gemäß der Anmeldung genannten Vorteile auf, welche an dieser Stelle zur Vermeidung von Wiederholungen nicht nochmals aufgeführt werden. Insbesondere für ein Fahrzeug mit Start/Stopp-System ist dabei die weiter verbesserte Spannungsstabilisierung von besonderer Bedeutung, da ein Starten des Verbrennungsmotors eine hohe Leistungsaufnahme bedeutet, was zu Spannungseinbrüchen in dem Fahrzeugbordnetz führen kann. Dies kann mittels des Bordnetzes gemäß den genannten Ausführungsformen in vorteilhafter Weise vermieden werden.

Falls der bestimmte Betriebszustand einen Startvorgang eines Verbrennungsmotors des Fahrzeugs bildet, wird in einer Ausführungsform die erste Schalteinrichtung geöffnet, die zweite Schalteinrichtung und die dritte Schalteinrichtung werden geschlossen und der DC/DC-Wandler wird aktiviert. Insbesondere kann der DC/DC-Wandler derart angesteuert werden, dass dieser spannungsgeregelt betrieben wird.

Falls der bestimmte Betriebszustand einen deaktivierten Zustand des Verbrennungsmotors oder einen Niedrigenergiemodus des Fahrzeugs bildet, wird in einer weiteren Ausführungsform die erste Schalteinrichtung geöffnet, die zweite Schalteinrichtung wird geschlossen, die dritte Schalteinrichtung wird geöffnet und der DC/DC-Wandler wird derart angesteuert, dass ein Energieübertrag von dem ersten Bordnetzzweig in den dritten Bordnetzzweig erfolgt.

Ausführungsformen der Anmeldung werden nun anhand der beigefügten Figuren näher erläutert.
- Figuren 1A und 1B: zeigen jeweils ein Blockschaltbild eines Bordnetzes gemäß einer ersten Ausführungsform der Anmeldung;
- Figuren 2A und 2B: zeigen jeweils ein Blockschaltbild eines Bordnetzes gemäß einer zweiten Ausführungsform der Anmeldung;
- Figur 3: zeigt ein Prinzipschaltbild der Bordnetze gemäß den Figuren 1A bis 2B;
- Figur 4: zeigt Spannungs-Zeit-Diagramme in einem ersten, zweiten und dritten Bordnetzzweig eines Bordnetzes gemäß den in Figuren 1A bis 2B dargestellten Ausführungsformen.

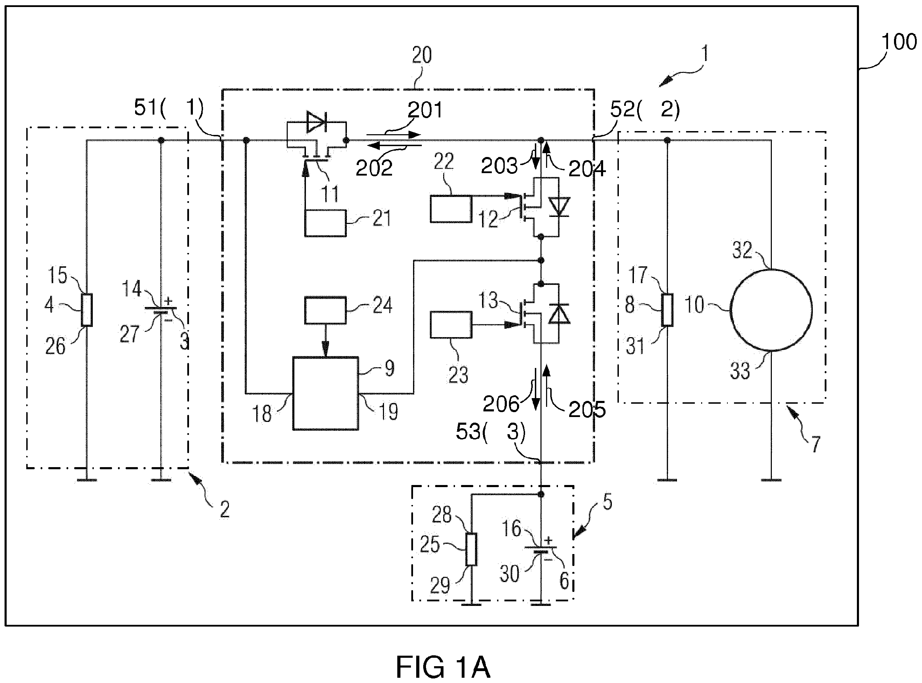

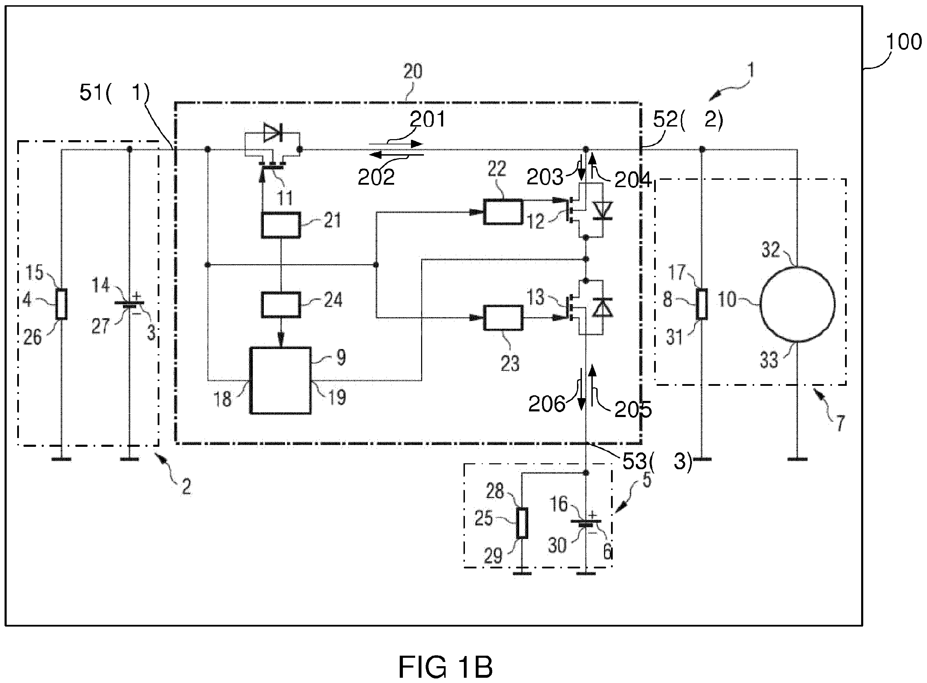

Figuren 1A und 1B zeigen ein Blockschaltbild eines Fahrzeugs 100 mit einem Bordnetz 1 gemäß einer ersten Ausführungsform der Anmeldung.

Das Bordnetz 1 weist einen ersten Bordnetzzweig 2 auf, in dem ein erster elektrischer Energiespeicher 3, beispielsweise in Form eines 12-Volt-Akkumulators, und ein erster elektrischer Verbraucher 4, der eine dynamische Last bildet, angeordnet sind. Der erste elektrische Energiespeicher 3 kann beispielsweise ein Li-Ionen-Akkumulator oder ein Bleisäure-Akkumulator sein. Der erste elektrische Verbraucher 4 ist in der gezeigten Ausführungsform als Starter eines nicht näher dargestellten Verbrennungsmotors des Fahrzeugs 100 ausgebildet.

Das Bordnetz 1 weist ferner einen zweiten Bordnetzzweig 7 auf, in dem ein zweiter, sensitiver elektrischer Verbraucher 8 angeordnet ist. In dem zweiten Bordnetzzweig 7 ist ferner einen Generator 10 angeordnet, der über eine nicht näher dargestellte mechanische Kopplung, beispielsweise einen Keilrippenriemen, mit dem Verbrennungsmotor des Fahrzeugs 100 verbunden ist.

Zudem weist das Bordnetz 1 einen dritten Bordnetzzweig 5 auf, in dem ein dritter elektrischer Energiespeicher 6 angeordnet ist. Der dritte elektrische Energiespeicher 6 kann beispielsweise als 12-Volt-Akkumulator, insbesondere in Form eines Li-Ionen-Akkumulators, ausgebildet sein. In einer weiteren Ausgestaltung ist der dritte elektrische Energiespeicher 6 als Kondensator, insbesondere als ein so genannter Superkondensator, bzw. als ein Kondensatormodul ausgebildet. In der gezeigten Ausführungsform ist in dem dritten Bordnetzzweig 5 zudem ein dritter elektrischer Verbraucher 25 angeordnet.

Der erste Bordnetzzweig 2, der zweite Bordnetzzweig 5 und der dritte Bordnetzzweig 7 weisen in der gezeigten Ausführungsform die gleiche Nominalspannung auf, beispielsweise 12 Volt oder 14 Volt.

Weiterhin umfasst das Bordnetz 1 eine Steuervorrichtung 20 zum Steuern von Stromflüssen zwischen dem ersten, dem zweiten und dem dritten Bordnetzzweig 2, 7 und 5. Die Steuervorrichtung 20 ist über einen ersten Stromanschluss 51 mit dem ersten Bordnetzzweig 2, über einen zweiten Stromanschluss 52 mit dem zweiten Bordnetzzweig 7, und über einen dritten Stromanschluss 53 mit dem dritten Bordnetzzweig 5 elektrisch verbunden.

Die Steuervorrichtung 20 weist zwischen dem ersten und dem zweiten Stromanschluss 51, 52 eine erste Schalteinrichtung 11, zwischen dem zweiten und dem dritten Stromanschluss 52, 53 eine zweite Schalteinrichtung 12 und eine dritte Schalteinrichtung 13 auf. Die erste Schalteinrichtung 11, die zweite Schalteinrichtung 12 und die dritte Schalteinrichtung 13 sind in der gezeigten Ausführungsform als Halbleiterschalter in Form von normal sperrenden n-Kanal-MOSFET-Schaltern mit einer Body-Diode ausgebildet.

Zwischen dem ersten Stromanschluss 51 und einem Verbindungsanschluss zwischen der zweiten und der dritten Schalteinrichtung 12, 13 weist die Steuervorrichtung 20 ferner einen DC/DC-Wandler 9 auf. Der DC/DC-Wandler 9 ist als bidirektionaler Gleichspannungswandler ausgebildet, der insbesondere eine erste Spannung, also ein erstes Spannungspotential Φ1 an dem ersten Stromanschluss 51, in eine zweite Spannung, also in ein zweites Spannungspotential Φ2 an dem zweiten Stromanschluss 52, oder in eine dritte Spannung, also in ein drittes Spannungspotential Φ3 an dem dritten Stromanschluss 53, und umgekehrt umwandeln kann. Dazu ist der DC/DC-Wandler 9 in der gezeigten Ausführungsform als Synchronwandler ausgebildet.

Der MOSFET-Schalter der ersten Schalteinrichtung 11 ist sourceseitig mit dem Pluspfad des ersten Bordnetzzweigs 2 sowie drainseitig mit dem zweiten Bordnetzzweig 7 verbunden. Weiterhin ist der MOSFET-Schalter der ersten Schalteinrichtung 11 drainseitig mit der Sourceseite des MOSFET-Schalters der zweiten Schalteinrichtung 12 verbunden. Der MOSFET-Schalter der zweiten Schalteinrichtung 12 ist zudem drainseitig mit der Drainseite des MOSFET-Schalters der dritten Schalteinrichtung 13 sowie mit dem DC/DC-Wandler 9 verbunden. Der MOSFET-Schalter der dritten Schalteinrichtung 13 ist drainseitig ebenfalls mit dem DC/DC-Wandler 9 verbunden. Weiterhin ist der MOSFET-Schalter der dritten Schalteinrichtung 13 sourceseitig mit dem Pluspfad des dritten Bordnetzzweigs 5 verbunden. Somit sind insbesondere der MOSFET-Schalter der zweiten Schalteinrichtung 12 und der MOSFET-Schalter der dritten Schalteinrichtung 13 mit dem DC/DC-Wandler 9 verbunden.

Damit ist die Body-Diode des MOSFET-Schalters der ersten Schalteinrichtung 11 von dem ersten Bordnetzzweigs 2 zu dem zweiten Bordnetzzweig 7 hin leitend und umgekehrt sperrend angeordnet. Die Body-Diode des MOSFET-Schalters der zweiten Schalteinrichtung 12 ist von dem zweiten Bordnetzzweig 7 zu dem DC/DC-Wandler 9 hin leitend und umgekehrt sperrend angeordnet. Die Body-Diode des MOSFET-Schalters der dritten Schalteinrichtung 13 ist dann von dem dritten Bordnetzzweig 5 zu dem DC/DC-Wandler 9 hin leitend und umgekehrt sperrend angeordnet.

In einer geöffneten und somit stromsperrenden Schaltstellung des MOSFET-Schalters fließt über die Body-Diode des MOSFET-Schalters der ersten Schalteinrichtung 11 ein Strom von dem ersten Bordnetzzweig 2 in den zweiten Bordnetzzweig 7 in einer ersten Stromflussrichtung 201, sobald die Spannung bzw. die Potentialdifferenz zwischen dem ersten Spannungspotential Φ1 an dem ersten Stromanschluss 51 und dem zweiten Spannungspotential Φ2 an dem zweiten Stromanschluss 52 höher als die Flussspannung der Body-Diode der Schalteinrichtung 11 ist. Sobald die Potentialdifferenz zwischen dem ersten und dem zweiten Spannungspotential Φ1, Φ2 die Flussspannung der Body-Diode unterschreitet, unterbricht der Stromfluss durch die Body-Diode in der Flussrichtung 201.

Wird der MOSFET-Schalter der ersten Schalteinrichtung 11 geschlossen und in eine stromleitende Schaltstellung gebracht, so fließt ein Strom von dem zweiten Bordnetzzweig 7 in den ersten Bordnetzzweig 2 durch den geschlossenen MOSFET-Schalter in einer zweiten Stromflussrichtung 202, bis die Spannung in dem ersten Bordnetzzweig 2, bzw. das erste Spannungspotential Φ1 auf die Höhe der Spannung in dem zweiten Bordnetzzweig 7, bzw. des zweiten Spannungspotentials Φ2 gestiegen ist. Damit wird der erste Bordnetzzweig 2 bzw. der erste elektrische Verbraucher 4 mit Strom aus dem zweiten Bordnetzzweig 7 versorgt, der von dem in dem zweiten Bordnetzzweig 7 befindlichen Generator 10 erzeugt wird.

Damit kann die erste Schalteinrichtung 11 bei der geöffneten Schaltstellung des MOSFET-Schalters der ersten Schalteinrichtung 11 einen nur in der Stromflussrichtung 201 unidirektional stromleitenden Schalzustand und bei der geschlossenen Schaltstellung des MOSFET-Schalters einen in den beiden Stromflussrichtungen 201 und 202 bidirektional stromleitenden Schaltzustand einnehmen.

Ein erster Stromanschluss 14 des ersten Energiespeichers 3 ist mit einem ersten Stromanschluss 15 des ersten elektrischen Verbrauchers 4 elektrisch gekoppelt bzw. elektrisch leitend verbunden.

Der Generators 10 ist über einen ersten Stromanschluss 32 mit einem ersten Stromanschluss 17 des zweiten elektrischen Verbrauchers 8 elektrisch leitend verbunden.

Ein erster Stromanschluss 16 des dritten Energiespeichers 6 ist zudem mit einem ersten Stromanschluss 28 des dritten elektrischen Verbrauchers 25 elektrisch gekoppelt bzw. elektrisch leitend verbunden.

Ein erster Stromanschluss 18 des DC/DC-Wandlers 9 ist über den ersten Stromanschluss 51 der Steuervorrichtung 20 mit dem ersten Stromanschluss 14 des ersten Energiespeichers 3 und dem ersten Stromanschluss 15 des ersten elektrischen Verbrauchers 4 elektrisch gekoppelt.

Ein zweiter Stromanschluss 27 des ersten Energiespeichers 3 und ein zweiter Stromanschluss 30 des dritten Energiespeichers 6 sind mit einem Bezugspotential, das vorzugsweise ein Massepotential ist, elektrisch gekoppelt bzw. elektrisch leitend verbunden. Weiterhin sind ein zweiter Stromanschluss 26 des ersten elektrischen Verbrauchers 4, ein zweiter Stromanschluss 29 des dritten elektrischen Verbrauchers 25, ein zweiter Stromanschluss 31 des zweiten elektrischen Verbrauchers 8 und ein zweiter Stromanschluss 33 des Generators 10 mit dem Bezugspotential elektrisch gekoppelt bzw. elektrisch leitend verbunden.

Die Body-Diode des MOSFET-Schalters der zweiten Schalteinrichtung 12 ermöglicht einen Stromfluss von dem zweiten Stromanschluss 52 der Steuervorrichtung 20 zu dem DC/DC-Wandler 9 bzw. zu einem zweiten Stromanschluss 19 des DC/DC-Wandlers 9 in einer Stromflussrichtung 203 auch bei der geöffneten Schaltstellung des MOSFET-Schalters der zweiten Schalteinrichtung 12. Damit kann der DC/DC-Wandler 9 die Spannung an dem ersten Bordnetzzweig 2 bzw. das Spannungspotential Φ1 an dem ersten Stromanschluss 51 der Steuervorrichtung 20 mit Strom von dem zweiten Bordnetzzweig 7 auch bei einer geöffneten und somit stromsperrenden Schaltstellung des MOSFET-Schalters der zweiten Schalteinrichtung 12 über die Body-Diode des MOSFET-Schalters auf einen höheren Spannungs- bzw. Potentialwert erhöhen.

Damit kann der Strompfad aus dem DC/DC-Wandler 9 und der zweiten Schalteinrichtung 12 zwischen dem ersten und dem zweiten Bordnetzzweig 2 und 7 als ein je nach der Schaltstellung der zweiten Schalteinrichtung 12 bidirektionaler Redundanzstrompfad zu dem Strompfad aus der ersten Schalteinrichtung 11 genutzt werden, falls der Strompfad aus der ersten Schalteinrichtung 11 durch einen Fehler unterbricht. Insbesondere kann mit diesem Redundanzstrompfad ein Stromfluss von dem zweiten Bordnetzzweig 7 zu dem ersten Bordnetzzweig 2 sichergestellt werden.

Analog kann der Strompfad aus dem DC/DC-Wandler 9 zwischen dem ersten Bordnetzzweig 2 und dem dritten Bordnetzzweig 5 als ein bidirektionaler Redundanzstrompfad zu dem Strompfad aus der ersten und der zweiten Schaleinrichtung 11 und 12 genutzt werden, falls der Strompfad aus der ersten und der zweiten Schalteinrichtung 11 und 12 durch einen Fehler unterbricht.

Ein Stromfluss in einer der Stromflussrichtung 203 entgegengesetzten Flussrichtung 204 wird aber erst dann möglich, wenn der MOSFET-Schalter der zweiten Schalteinrichtung 12 geschlossen bzw. in eine bidirektional stromleitende Schaltstellung gebracht wird. Bei der geschlossenen Schaltstellung des MOSFET-Schalters der zweiten Schalteinrichtung 12 und bei einem gleichzeitig in einer geöffneten und somit stromsperrenden Schaltstellung befindlichen MOSFET-Schalter der ersten Schalteinrichtung 11 kann der DC/DC-Wandler 9 erst die Spannung an dem zweiten Bordnetzzweig 7 bzw. das Spannungspotential Φ2 an dem zweiten Stromanschluss 52 der Steuervorrichtung 20 mit Strom von dem ersten Bordnetzzweig 2 auf einen höheren Spannungs- bzw. Potentialwert erhöhen.

Damit kann die zweite Schalteinrichtung 12 bei der geöffneten Schaltstellung des MOSFET-Schalters der zweiten Schalteinrichtung 12 einen nur in der Stromflussrichtung 203 unidirektional stromleitenden Schalzustand und bei der geschlossenen Schaltstellung des MOSFET-Schalters einen in den beiden Stromflussrichtungen 203 und 204 bidirektional stromleitenden Schaltzustand einnehmen.

Analog ermöglicht die Body-Diode des MOSFET-Schalters der dritten Schalteinrichtung 13 einen Stromfluss von dem dritten Stromanschluss 53 der Steuervorrichtung 20 zu dem DC/DC-Wandler 9 bzw. zu dem zweiten Stromanschluss 19 des DC/DC-Wandlers 9 in einer Stromflussrichtung 205 auch bei einer geöffneten stromsperrenden Schaltstellung des MOSFET-Schalters der dritten Schalteinrichtung 13. Damit kann der DC/DC-Wandler 9 die Spannung an dem ersten Bordnetzzweig 2 bzw. das Spannungspotential Φ1 an dem ersten Stromanschluss 51 der Steuervorrichtung 20 mit Strom von dem dritten Bordnetzzweig 5 auch bei einer geöffneten und somit stromsperrenden Schaltstellung des MOSFET-Schalters der dritten Schalteinrichtung 13 über die Body-Diode des MOSFET-Schalters auf einen höheren Spannungs- bzw. Potentialwert erhöhen.

Ein Stromfluss in einer der Stromflussrichtung 205 entgegengesetzten Flussrichtung 206 wird aber erst dann möglich, wenn der MOSFET-Schalter der dritten Schalteinrichtung 13 geschlossen bzw. in eine stromleitende Schaltstellung gebracht wird. Bei dem geschlossenen MOSFET-Schalter der dritten Schalteinrichtung 13 kann der DC/DC-Wandler 9 die Spannung an dem dritten Bordnetzzweig 5 bzw. das Spannungspotential Φ3 an dem dritten Stromanschluss 53 der Steuervorrichtung 20 mit Strom von dem ersten Bordnetzzweig 2 auf einen höheren Spannungs- bzw. Potentialwert erhöhen.

Damit kann die dritte Schalteinrichtung 13 bei der geöffneten Schaltstellung des MOSFET-Schalters der dritten Schalteinrichtung 13 einen nur in der Stromflussrichtung 205 unidirektional stromleitenden Schalzustand und bei der geschlossenen Schaltstellung des MOSFET-Schalters einen in den beiden Stromflussrichtungen 205 und 206 bidirektional stromleitenden Schaltzustand einnehmen.

Das Bordnetz 1 weist weiterhin eine erste Ansteuereinheit 21 auf, die zum Ansteuern der ersten Schalteinrichtung 11 ausgebildet ist. Ferner weist das Bordnetz 1 eine zweite Ansteuereinheit 22, ausgebildet zum Ansteuern der zweiten Schalteinrichtung 12, und eine dritte Ansteuereinheit 23, ausgebildet zum Ansteuern der dritten Schalteinrichtung 13, auf. Mittels der Ansteuereinheiten 21 bis 23 werden die MOSFET-Schalters der Schalteinrichtungen 11 bis 13 geöffnet und geschlossen, d.h. in die entsprechenden oben bereits beschriebenen Schaltstellungen gebracht. Darüber hinaus weist das Bordnetz 1 eine vierte Ansteuereinheit 24 auf, die zum Ansteuern des DC/DC-Wandlers 9 ausgebildet ist. Insbesondere kann mittels der vierten Ansteuereinheit 24 die Richtung eines Energieübertrags zwischen den Bordnetzzweigen 2, 7 und 5 über den DC/DC-Wandler 9 festgelegt werden. Weiterhin kann damit der Regelbetrieb des DC/DC-Wandlers 9 festgelegt werden, d.h. es kann bestimmt werden, ob der DC/DC-Wandler 9 spannungsgeregelt, stromgeregelt oder leistungsgeregelt betrieben wird.

In der gezeigten Ausführungsform sind der DC/DC-Wandler 9, die erste Schalteinrichtung 11, die zweite Schalteinrichtung 12, die dritte Schalteinrichtung 13, die erste Ansteuereinheit 21, die zweite Ansteuereinheit 22, die dritte Ansteuereinheit 23 und die vierte Ansteuereinheit 24 Bestandteil einer Steuervorrichtung 20, die in Form von einem Leistungsmodul ausgebildet ist.

Wie bereits erläutert, sind die Ansteuereinheiten 21 bis 24 zum Ansteuern der Schalteinrichtungen 11 bis 13 beziehungsweise zum Ansteuern des DC/DC-Wandlers 9 ausgebildet. Figur 1B zeigt dazu eine Ausgestaltung des Bordnetzes 1, bei der die erste Ansteuereinheit 21, die zweite Ansteuereinheit 22, die dritte Ansteuereinheit 23 und die vierte Ansteuereinheit 24 mit dem Pluspfad des ersten Bordnetzzweigs 2 elektrisch gekoppelt bzw. elektrisch leitend verbunden sind. Weiterhin können die Ansteuereinheiten 21 bis 24 mit weiteren Fahrzeugkomponenten, insbesondere weiteren Steuereinheiten des Fahrzeugs 100, gekoppelt sein, um in Abhängigkeit eines jeweiligen Betriebszustands des Fahrzeugs 100 Ansteuersignale zum Ansteuern der ersten Schalteinrichtung 11, der zweiten Schalteinrichtung 12, der dritten Schalteinrichtung 13 und des DC/DC-Wandlers 9 zu erzeugen. Weiterhin können insbesondere die Ansteuereinheiten 21 bis 24 Fehlerdiagnoseeinheiten aufweisen, die zum Ermitteln von Fehlerzuständen ausgebildet sind. Dadurch kann das Ansteuern der ersten Schalteinrichtung 11, der zweiten Schalteinrichtung 12, der dritten Schalteinrichtung 13 und/oder des DC/DC-Wandlers 9 bei einem erkannten Fehlerzustand einer entsprechenden Fahrzeugkomponente unabhängig von dem jeweiligen momentanen Betriebszustand des Fahrzeugs 100 erfolgen.

Mittels der in den Figuren 1A und 1B gezeigten Bordnetz-Topologie kann der Generator 10 in einem Zweig des Bordnetzes 1 angeordnet werden, der keinen eigenen elektrischen Energiespeicher aufweist, d.h. in der gezeigten Ausführungsform in dem zweiten Bordnetzzweig 7, der frei von einem eigenen elektrischen Energiespeicher ist.

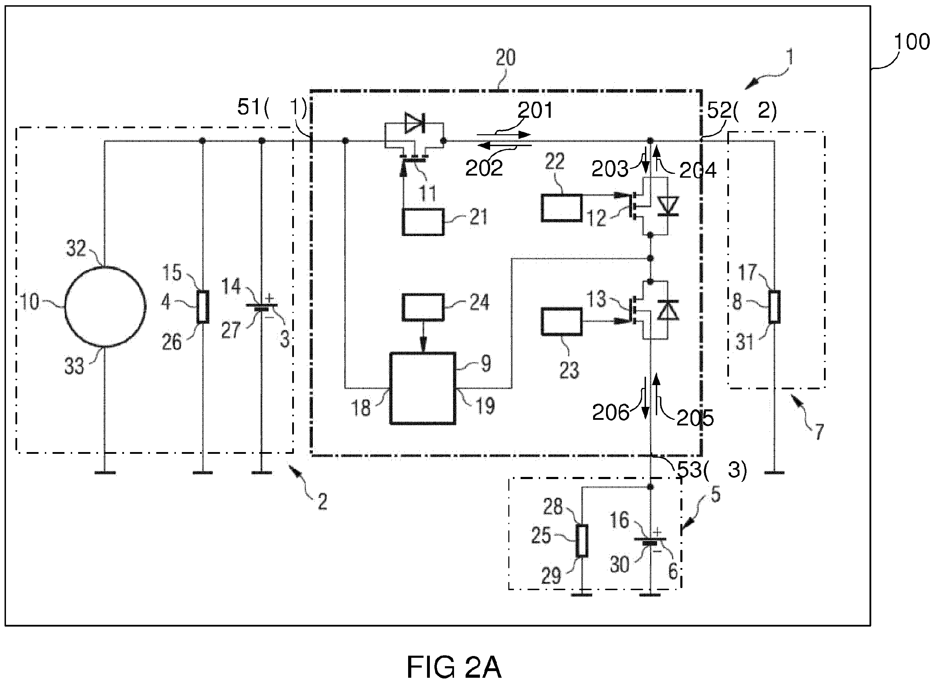

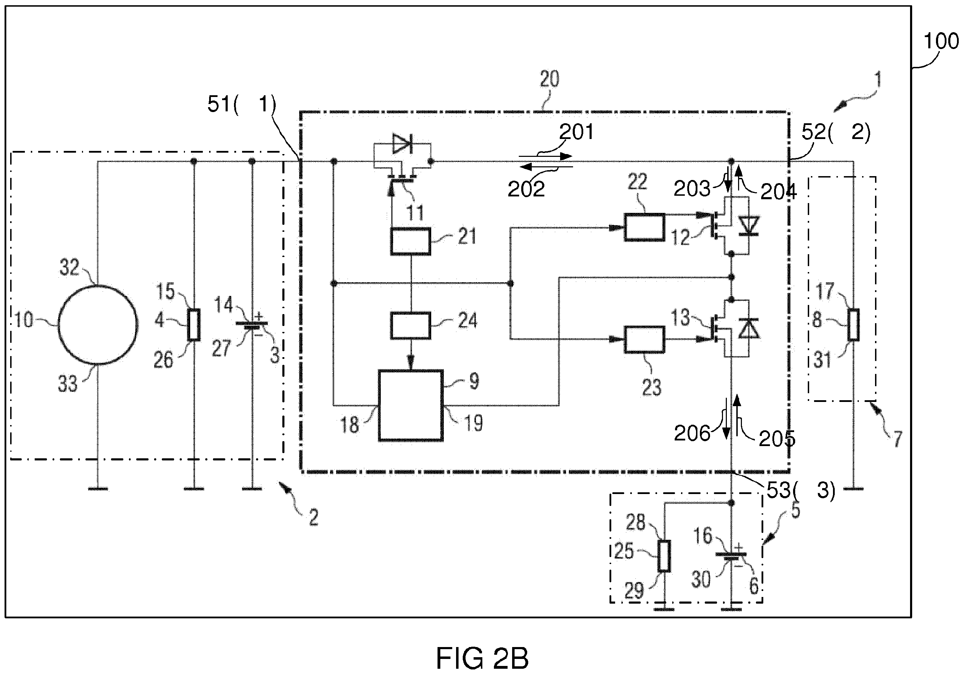

Figuren 2A und 2B zeigen ein Blockschaltbild eines Bordnetzes 1 eines Fahrzeugs 100 gemäß einer zweiten Ausführungsform der Anmeldung. Komponenten mit den gleichen Funktionen wie in den Figuren 1A und 1B werden mit den gleichen Bezugszeichen gekennzeichnet und im Folgenden nicht nochmals erläutert.

In der gezeigten zweiten Ausführungsform ist der Generator 10 in dem ersten Bordnetzzweig 2 angeordnet. Dabei ist der erste Stromanschluss 32 des Generators 10 mit dem ersten Stromanschluss 15 des ersten elektrischen Verbrauchers 4, dem ersten Stromanschluss 14 des ersten Energiespeichers 3 und dem ersten Stromanschluss 18 des DC/DC-Wandlers 9 elektrisch gekoppelt bzw. elektrisch leitend verbunden.

Wie in Figur 2B dargestellt ist, sind die erste Ansteuereinheit 21, die zweite Ansteuereinheit 22, die dritte Ansteuereinheit 23 und die vierte Ansteuereinheit 24 wiederum mit dem Pluspfad des ersten Bordnetzzweigs 2 gekoppelt bzw. elektrisch leitend verbunden.

Die in den Figuren 1A bis 2B gezeigte Bordnetz-Topologie, die auch als DEM ("Duale Energie Management", auf Englisch "Dual Energy Management") bezeichnet wird, beinhaltet dabei eine Verschaltung des DC/DC-Wandlers 9 in der Steuervorrichtung 20.

Dabei kann in einer weiteren Ausgestaltung der erste Bordnetzzweig 2 und/oder der dritte Bordnetzzweig 5 Bestandteil der Steuervorrichtung 20 sein, d.h. die genannten Bordnetzzweige können in die Steuervorrichtung 20 integriert und damit ein kompaktes Modul bereitgestellt werden.

Weiterhin können der erste Bordnetzzweig 2, der zweite Bordnetzzweig 7 und/oder der dritte Bordnetzzweig 5 zusätzlich zu den in den Figuren 1A bis 2B gezeigten elektrischen Verbrauchern 4, 8 und 25 weitere elektrische Verbraucher aufweisen, d.h. der erste Bordnetzzweig 2, der zweite Bordnetzzweig 7 und der dritte Bordnetzzweig 5 können jeweils zumindest einen elektrischen Verbraucher aufweisen.

In den Ausführungsformen gemäß der Figuren 1A bis 2B sind die Bordnetz-Komponenten im Pluspfad angeordnet. Es ist in einer weiteren Ausgestaltung auch möglich, dass diese im Masse- bzw. Minuspfad angeordnet sind. Weiterhin kann eine Potentialtrennung zwischen den einzelnen Bordnetzzweigen erfolgen.

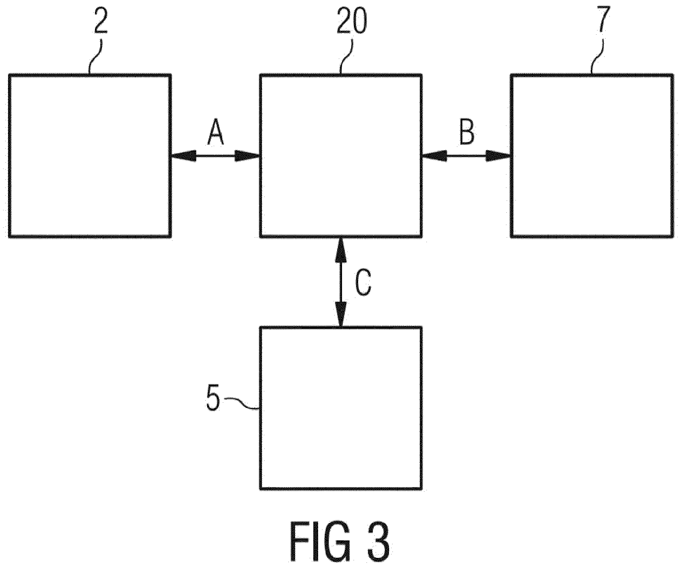

Figur 3 zeigt ein Prinzipschaltbild der Bordnetze 1 gemäß den Figuren 1A bis 2B. Komponenten mit den gleichen Funktionen wie in den vorhergehenden Figuren werden mit den gleichen Bezugszeichen gekennzeichnet und im Folgenden nicht nochmals erläutert.

Wie in Figur 3 schematisch dargestellt ist, kann ein Energieaustausch zwischen dem ersten Bordnetzzweig 2, der ein erstes Energiesystem Esys1 bildet, dem zweiten Bordnetzzweig 7, der ein zweites Energiesystem Esys2 bildet, und dem dritten Bordnetzzweig 5, der ein drittes Energiesystem Esys3 bildet, mittels der Steuervorrichtung 20 erfolgen. Die Steuervorrichtung 20 verbindet die drei Energiesysteme Esys1, Esys2 und Esys3 miteinander und ermöglicht damit den Energieaustausch zwischen den drei Systemen. Der Energieübertrag zwischen dem ersten Bordnetzzweig 2, dem zweiten Bordnetzzweig 7, dem dritten Bordnetzzweig 5 und der Steuervorrichtung 20 ist dabei in Figur 3 schematisch mittels Pfeilen A, B und C dargestellt.

Das Energiesystem Esys1 besteht in einer Ausgestaltung aus einem Energiespeicher, der beispielsweise als 12V-Batterie ausgeführt ist, und mindestens einer dynamischen Last. Das Energiesystem Esys2 besteht in einer Ausgestaltung aus einem Generator und mindestens einer sensitiven Last, das heißt, in einer Ausführungsform ist der Generator Bestandteil des eigenständigen Energiesystems Esys2. Optional kann die Position des Generators auch in dem Energiesystem Esys1 realisiert werden. Das Energiesystem Esys3 besteht in einer Ausgestaltung aus einem Energiespeicher, der beispielsweise als 12V-Batterie ausgeführt ist. Optional können in diesem Energiesystem Verbraucher vorhanden sein. Für den sicheren Bordnetzbetrieb mit dem Generator ist dieser mit mindestens einem Energiespeicher verbunden, da ansonsten die Gefahr einer Bordnetz-Kollabierung besteht, das heißt, die sensitiven Lasten benötigen mehr Energie als der Generator liefern kann. Für eine elektrische Verbindung zu dem Energiespeicher des dritten Energiesystems Esys3 werden die in den Figuren 1A bis 2B gezeigten Schalteinrichtungen 12 und 13 geschlossen. Eine weitere Möglichkeit ist die Herstellung einer elektrischen Verbindung zu dem Energiespeicher in dem ersten Energiesystem Esys1 mit der ersten Schalteinrichtung 11. Mittels der gezeigten Topologie kann ein alternativer Energiepfad zu dem Energiespeicher in dem Energiesystem Esys1 hergestellt werden. Dazu wird eine elektrische Verbindung mit der zweiten Schalteinrichtung 12 und dem in den Figuren 1A bis 2B gezeigten DC/DC-Wandler 9 erzeugt, wobei die erste Schalteinrichtung 11 geöffnet ist.

Der DC/DC-Wandler 9 stellt bei geschlossener dritter Schalteinrichtung 13 die Energiebrücke zwischen Esys1 und Esys3 her und ermöglicht einen Ladungsaustausch zwischen dem in den Figuren 1A bis 2B gezeigten ersten Energiespeicher 3 und dem dritten Energiespeicher 6 oder umgekehrt von Esys3 nach Esys1. Ein möglicher Anwendungsfall ist der Betrieb von Hochstromverbrauchern in Esys1, beispielsweise bei einem Motorstart, wobei zusätzlich Energie, vorzugsweise stromgeregelt, aus Esys3 zur Verfügung gestellt wird. Dazu wird die dritte Schalteinrichtung 13 geschlossen und die erste Schalteinrichtung 11 sowie die zweite Schalteinrichtung 12 geöffnet.

Weiterhin stellt der DC/DC-Wandler 9 bei geschlossener zweiter Schalteinrichtung 12 eine Energiebrücke zwischen Esys1 und Esys2 oder umgekehrt her. Dabei sind die erste Schalteinrichtung 11 und die dritte Schalteinrichtung 13 geöffnet. Eine Anwendungsmöglichkeit ist bei ausgeschaltetem Motor des Fahrzeugs, bei der der DC/DC-Wandler 9 vorzugsweise spannungsgeregelt arbeitet. Anstelle des Generators in Esys2 generiert der DC/DC-Wandler 9 die nominale Spannung für das System Esys2. Dies ist eine besonders vorteilhafte Eigenschaft der gezeigten DEM-Topologie.

Weiterhin ermöglicht der DC/DC-Wandler 9 bei geschlossenen Schalteinrichtungen 12 und 13 den Energietransfer von Esys1 in die Energiesysteme Esys2 und Esys3 oder den Energietransfer aus den Energiesystemen Esys2 und Esys3 nach Esys1. Die erste Schalteinrichtung 11 ist dabei geöffnet.

Damit wird der DC/DC-Wandler 9 optimaler eingesetzt, wodurch sich neue Möglichkeiten in der Redundanz, Verfügbarkeit und somit für die funktionale Sicherheit ergeben. Die Systemspannung für sensitive Lasten in Esys2 bleibt unabhängig von dem Fahrzeugzustand bzw. unabhängig von Spannungsschwankungen in Esys1 stabil. Weiterhin werden die Funktionen der ersten Schalteinrichtung 11, die einen Hauptschalter bildet, und der zweiten Schalteinrichtung 12 sowie der dritten Schalteinrichtung 13, die Nebenschalter bilden, in möglichst optimaler Weise genutzt, wodurch sich wiederum neue Möglichkeiten in der Redundanz, Verfügbarkeit und somit für die funktionale Sicherheit ergeben. Ferner ergibt sich ein Kostenvorteil durch die Möglichkeit der Systemabstimmung mit Generator, erstem und zweitem Energiespeicher sowie den genannten elektrischen Verbrauchern. Die Komponenten Generator und erster sowie zweiter Energiespeicher können somit in kleinere Leistungsklassen projektiert werden.

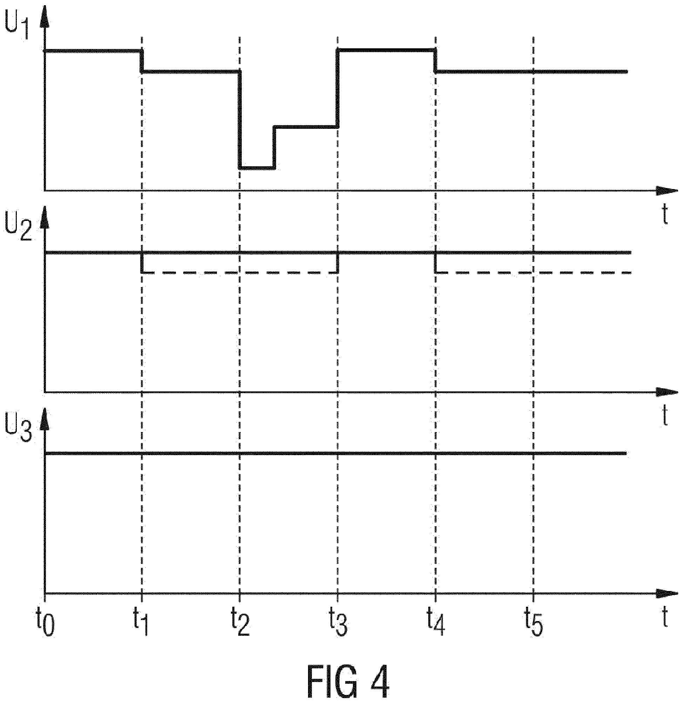

Figur 4 zeigt Spannungs-Zeit-Diagramme in einem ersten, zweiten und dritten Bordnetzzweig eines Bordnetzes gemäß der Anmeldung. Dabei ist in dem oberen Spannungs-Zeit-Diagramm der Figur 4 schematisch der zeitliche Verlauf der momentanen Spannung des ersten Bordnetzzweigs 2 aufgetragen. In dem mittleren Spannungs-Zeit-Diagramm ist schematisch der zeitliche Verlauf der momentanen Spannung des dritten Bordnetzzweigs 5 und in dem unteren Spannungs-Zeit-Diagramm der Figur 4 schematisch der zeitliche Verlauf der momentanen Spannung des zweiten Bordnetzzweigs des Bordnetzes 7 aufgetragen.

Dabei ist in dem mittleren Spannungs-Zeit-Diagramm mit einer durchgezogenen Linie schematisch der Verlauf der Spannung dargestellt, wie sie sich ergibt, falls der in den Figuren 1A bis 2B dargestellte dritte elektrische Energiespeicher 6 als Doppelschichtkondensator oder Li-Ionen-Akkumulator ausgebildet ist. Mit einer gestrichelten Linie ist schematisch die Abweichung von diesem Spannungsverlauf dargestellt, die sich ergibt, falls der dritte Energiespeicher 6 als Bleisäure-Akkumulator ausgebildet ist.

Das Fahrzeug 100, in dem das Bordnetz 1 angeordnet ist, befindet sich zu unterschiedlichen Zeitpunkten in unterschiedlichen Betriebszuständen, wobei sich das Fahrzeug 100 zwischen den Zeitpunkten t₀ und t₁ in einem Betriebszustand Ia befindet, in dem der Verbrennungsmotor des Fahrzeugs 100 eingeschaltet ist, und sich zwischen den Zeitpunkten t₁ und t₂ in einem Betriebszustand II befindet, in dem der Verbrennungsmotor ausgeschaltet ist. Weiterhin befindet sich das Fahrzeug 100 zwischen den Zeitpunkten t₂ und t₃ in einem Betriebszustand III, in dem der Verbrennungsmotor gestartet wird, sowie zwischen den Zeitpunkten t₃ und t₄ in einem Betriebszustand Ib, in dem der Verbrennungsmotor eingeschaltet ist. Zwischen den Zeitpunkten t₄ und t₅ befindet sich das Fahrzeug 100 wiederum in dem Betriebszustand II, in welchem der Motor ausgeschaltet ist, und nach dem Zeitpunkt t₅ befindet sich das Fahrzeug 100 in einem Betriebszustand IV, der einen Niedrigenergiemodus bzw. Niedrigverbrauch-Modus, der auch als Low Power Mode (LPM) bezeichnet wird, darstellt. Beispielsweise ist das Fahrzeug 100 in dem Betriebszustand IV verschlossen und eine Diebstahlwarnanlage und/oder ein Parklicht des Fahrzeugs 100 aktiviert.

In dem Betriebszustand Ia befinden sich der erste Bordnetzzweig 2, der zweite Bordnetzzweig 7 und der dritte Bordnetzzweig 5 jeweils auf Nominalspannungs-Niveau, beispielsweise bei 14 Volt. In dem Betriebszustand Ia ist die in den Figuren 1A bis 2B gezeigte erste Schalteinrichtung 11 geschlossen und die zweite und dritte Schalteinrichtung 12, 13 sind geöffnet. Weiterhin ist der ebenfalls in den Figuren 1A bis 2B gezeigte DC/DC-Wandler 9 nicht aktiviert.

In dem Betriebszustand II fällt die Spannung in dem ersten Bordnetzzweig 2 aufgrund des so genannten Polarisationseffektes, der sich bei ausgeschaltetem Verbrennungsmotor ergibt, falls der in den Figuren 1A bis 2B gezeigte erste elektrische Energiespeicher 3 als Bleisäure-Akkumulator ausgebildet ist, auf ein Niveau von beispielsweise 12 Volt ab. In diesem Betriebszustand fällt die Spannung in dem dritten Bordnetzzweig 5 ab, falls der dritte Energiespeicher 6 ebenfalls als Bleisäure-Akkumulator ausgebildet ist, und bleibt konstant, falls dieser als Doppelschichtkondensator oder Li-Ionen-Akkumulator ausgebildet ist. Die Spannung in dem zweiten Bordnetzzweig 7 bleibt in vorteilhafter Weise konstant. Dazu ist die erste Schalteinrichtung 11 geöffnet, die zweite Schalteinrichtung 12 geschlossen, die dritte Schalteinrichtung 13 geöffnet und der DC/DC-Wandler 9 wird derart angesteuert bzw. betätigt, dass ein Energieübertrag von dem ersten Bordnetzzweig 2 in den zweiten Bordnetzzweig 7 erfolgt.

In dem Betriebszustand III fällt die Spannung in dem ersten Bordnetzzweig 2 aufgrund der Betätigung des Starters 4 des Verbrennungsmotors zunächst weiter ab und steigt anschließend geringfügig an. Die Spannung in dem dritten Bordnetzzweig 5 bleibt im Vergleich zu dem Betriebszustand II unverändert und die Spannung in dem zweiten Bordnetzzweig 7 ist weiterhin konstant. Dabei ist in diesem Betriebszustand die erste Schalteinrichtung 11 geöffnet und die zweite und dritte Schalteinrichtung 12, 13 sind geschlossen. Der DC/DC-Wandler 9 wird derart angesteuert, dass dieser spannungsgeregelt betrieben wird.

In dem Betriebszustand Ib befinden sich der erste Bordnetzzweig 2, der zweite Bordnetzzweig 7 und der dritte Bordnetzzweig 5 wiederum auf Nominalspannungs-Niveau. Die erste Schalteinrichtung 11 ist dabei geschlossen, die zweite Schalteinrichtung 12 geöffnet und die dritte Schalteinrichtung 13 geschlossen. Der DC/DC-Wandler 9 wird derart angesteuert, dass dieser stromgeregelt aktiviert ist. In diesem Betriebszustand wird der dritte elektrische Energiespeicher 6 geladen.

Der Betriebszustand II zwischen den Zeitpunkten t₄ und t₅ entspricht demjenigen zwischen den Zeitpunkten t₁ und t₂. Die Schaltstellungen der Schalteinrichtungen 11, 12, 13 sowie der Betriebszustand des DC/DC-Wandlers 9 sind dabei entsprechend denjenigen zwischen den Zeitpunkten t₁ und t₂ gewählt.

In dem Betriebszustand IV bleiben die Spannungen in dem ersten Bordnetzzweig 2, dem zweiten Bordnetzzweig 7 und dem dritten Bordnetzzweig 5 verglichen mit dem Betriebszustand II jeweils konstant. Die erste Schalteinrichtung 11 ist in diesem Betriebszustand geöffnet, die zweite Schalteinrichtung 12 geschlossen und die dritte Schalteinrichtung 13 geöffnet. Der DC/DC-Wandler 9 wird derart angesteuert, dass ein Energieübertrag in den zweiten Bordnetzzweig 7 erfolgt. Die Schaltstellungen sowie der Betriebsmodus des DC/DC-Wandlers 9 sind somit entsprechend denjenigen in dem Betriebszustand II.

In Tabelle 1 sind die Schaltzustände bzw. Schaltstellungen der ersten, zweiten und dritten Schalteinrichtung 11, 12, 13 sowie der Betriebszustand des DC/DC-Wandlers 9 in den genannten Betriebszuständen nochmals aufgeführt.

**Tabelle 1**

| Fahrzeugzustand | Motor an, Ia | Motor aus, II | Motorstart, III |
|---|---|---|---|
| erste Schalteinrichtung 11 | geschlossen | geöffnet | geöffnet |
| zweite Schalteinrichtung 12 | geöffnet | geschlossen | geschlossen |
| dritte Schalteinrichtung 13 | geöffnet | geöffnet | geschlossen |
| DC/DC-Wandler 9 | deaktiviert | aktiviert | aktiviert |
| | | | |
| Fahrzeugzustand | Motor an, Ib | Motor aus, II | LPM, IV |
| erste Schalteinrichtung 11 | geschlossen | geöffnet | geöffnet |
| zweite Schalteinrichtung 12 | geöffnet | geschlossen | geschlossen |
| dritte Schalteinrichtung 13 | geschlossen | geöffnet | geöffnet |
| DC/DC-Wandler 9 | aktiviert | aktiviert | aktiviert |

In den Fahrtzuständen "Motor an", "Motor aus", "Motorstart" (Cranking), und "Low Power Mode" (LPM) ist mit der genannten DEM-Topologie im System Esys2 ein permanent nominaler Spannungszustand möglich. Die DEM-Topologie ermöglicht neben der Bordnetzstabilisierung auch den erweiterten redundanten Regelbetrieb. Dabei regelt entweder der Generator, falls sich dieser in dem zweiten Bordnetzzweig 7 befindet, oder der DC/DC-Wandler 9 die Spannung in dem zweiten Bordnetzzweig 7. Dies ermöglicht den Betrieb von sensitiven Verbrauchern innerhalb von Esys2. Wie in Figur 4 dargestellt ist, bleibt die Spannung in dem zweiten Bordnetzzweig 7 bei verschiedenen Fahrzeugzuständen auf einem gleich bleibenden Spannungsniveau. Insbesondere in dem Low Power Mode ist diese Funktionsweise darstellbar.

Der erste Energiespeicher 3 kann über zwei zueinander redundante Strompfade, also über einen ersten Strompfad aus der ersten Schalteinrichtung 11 und über einen zweiten Strompfad aus dem DC/DC-Wandler 9 und der zweiten Schalteinrichtung 12 mit Strom aus dem zweiten Bordnetzzweig 7 aufgeladen werden. Über diese beiden zueinander redundanten Strompfade kann der erste Energiespeicher 3 bei Bedarf den zweiten Bordnetzzweig 7 mit Strom versorgen. Der erste Energiespeicher 3 kann ferner über weitere zwei zueinander redundante Strompfade, also über einen dritten Strompfad aus der ersten, der zweiten und der dritten Schalteinrichtung 11, 12 und 13 und über einen vierten Strompfad aus dem DC/DC-Wandler 9 und der dritten Schalteinrichtung 13 mit Strom aus dem dritten Bordnetzzweig 5 aufgeladen werden. Über diese beiden zueinander redundanten Strompfade kann der erste Energiespeicher 3 bei Bedarf den dritten Bordnetzzweig 5 auch mit Strom versorgen.

Der dritte Energiespeicher 6 kann über die beiden zueinander redundanten Strompfade, also über den dritten Strompfad und über den vierten Strompfad mit Strom aus dem ersten Bordnetzzweig 2 aufgeladen werden. Über diese beiden zueinander redundanten Strompfade kann der dritte Energiespeicher 6 bei Bedarf den ersten Bordnetzzweig 2 auch mit Strom versorgen. Der dritte Energiespeicher 6 kann ferner über weitere zwei zueinander redundante Strompfade, also über einen fünften Strompfad aus der zweiten und der dritten Schalteinrichtung 12 und 13 und über einen sechsten Strompfad aus dem DC/DC-Wandler 9 und der ersten und der dritten Schalteinrichtung 11, 13 mit Strom aus dem zweiten Bordnetzzweig 7 aufgeladen werden. Über diese beiden zueinander redundanten Strompfade kann der dritte Energiespeicher 5 bei Bedarf den zweiten Bordnetzzweig 7 auch mit Strom versorgen.

Eine konstante Betriebsspannung in dem zweiten Bordnetzzweig 7 ist bei entsprechenden Schaltstellungen der MOSFET-Schalter der drei Schalteinrichtungen 11, 12 und 13 auch in einem Schlaf-, Wach-, oder Startzustand des Fahrzeugs möglich.

## Patentansprüche

1. Bordnetz (1) für ein Fahrzeug (100), aufweisend:
- einen ersten Bordnetzzweig (2), wobei der erste Bordnetzzweig (2) einen ersten, dynamischen elektrischen Verbraucher (4) aufweist,
- einen zweiten Bordnetzzweig (7), wobei der zweite Bordnetzzweig (7) einen zweiten, sensitiven elektrischen Verbraucher (8) aufweist,
- zwischen dem ersten (2) und dem zweiten (7) Bordnetzzweig eine erste steuerbare Schalteinrichtung (11), die ausgeführt ist,
∘ einen ersten, nur in einer ersten Stromflussrichtung (201) von dem ersten Bordnetzzweig (2) zu dem zweiten Bordnetzzweig (7) unidirektional stromleitenden Schaltzustand, oder
∘ einen zweiten, sowohl in der ersten Stromflussrichtung (201) als auch in einer zweiten Stromflussrichtung (202) von dem zweiten Bordnetzzweig (7) zu dem ersten Bordnetzzweig (2) bidirektional stromleitenden Schaltzustand,
einzunehmen;
- zwischen dem ersten Bordnetzzweig (2) und dem zweiten Bordnetzzweig (7) einen DC/DC-Wandler (9) und eine zweite steuerbare Schalteinrichtung (12) in einer Reihenschaltung parallel zu der ersten Schalteinrichtung (11),
- wobei der erste Bordnetzzweig (2) einen ersten Energiespeicher (3) aufweist,
- der DC/DC-Wandler (9) zum Aufladen des ersten Energiespeichers (3) des ersten Bordnetzzweigs (2) mit Strom von dem zweiten Bordnetzzweig (7) ausgeführt ist, und
- die zweite Schalteinrichtung (12) ausgeführt ist,
∘ einen ersten, nur in einer ersten Stromflussrichtung (203) von dem zweiten Bordnetzzweig (7) zu dem ersten Bordnetzzweig (2) unidirektional stromleitenden Schaltzustand, oder
∘ einen zweiten, sowohl in der ersten Stromflussrichtung (203) als auch in einer zweiten Stromflussrichtung (204) von dem ersten Bordnetzzweig (2) zu dem zweiten Bordnetzzweig (7) bidirektional stromleitenden Schaltzustand,
einzunehmen;
**dadurch gekennzeichnet, dass** das Bordnetz (1) ferner aufweist:
- einen dritten Bordnetzzweig (5),
- zwischen dem DC/DC-Wandler (9) und dem dritten Bordnetzzweig (5) eine dritte steuerbare Schalteinrichtung (13), die ausgeführt ist,
∘ einen ersten, nur in einer ersten Stromflussrichtung (205) von dem dritten Bordnetzzweig (5) zu dem DC/DC-Wandler (9) unidirektional stromleitenden Schaltzustand, oder
∘ einen zweiten, sowohl in der ersten Stromflussrichtung (205) als auch in einer zweiten Stromflussrichtung (206) von dem DC/DC-Wandler (9) zu dem dritten Bordnetzzweig (5) bidirektional stromleitenden Schaltzustand,
einzunehmen;
- der dritte Bordnetzzweig (5) einen dritten Energiespeicher (6) aufweist, und
- der DC/DC-Wandler (9) ferner ausgeführt ist, den ersten Energiespeicher (3) des ersten Bordnetzzweigs (2) mit Strom von dem dritten Energiespeicher (6) des dritten Bordnetzzweigs (5) und/oder umgekehrt aufzuladen.

2. Bordnetz (1) nach Anspruch 1, bei dem
- zumindest eine von der ersten (11), der zweiten (12) und der dritten (13) Schalteinrichtung einen Halbleitertransistor und eine Diode umfasst,
- wobei der Halbleitertransistor und die Diode zueinander parallel geschaltet sind.

3. Bordnetz (1) nach Anspruch 2, bei dem die zumindest eine Schalteinrichtung (11, 12, 13) einen MOSFET-Schalter mit einer Body-Diode umfasst.

4. Bordnetz (1) nach einem der vorhergehenden Ansprüche, bei dem der erste Verbraucher (4) als ein Starter zum Starten eines Verbrennungsmotors des Fahrzeugs (100) ausgebildet ist.

5. Bordnetz (1) nach einem der vorhergehenden Ansprüche, bei dem der DC/DC-Wandler (9) als ein steuerbarer bidirektionaler Gleichstromwandler ausgebildet ist.

## Claims

1. Vehicle electrical distribution system (1) for a vehicle (100), having:
- a first vehicle electrical distribution system branch (2), wherein the first vehicle electrical distribution system branch (2) has a first, dynamic electrical consumer (4),
- a second vehicle electrical distribution system branch (7), wherein the second vehicle electrical distribution system branch (7) has a second, sensitive electrical consumer (8),
- between the first (2) and the second (7) vehicle electrical distribution system branches, a first controllable switching device (11) which is implemented to take on:
∘ a first switching state which unidirectionally conducts current only in a first current flow direction (201) from the first vehicle electrical distribution system branch (2) to the second vehicle electrical distribution system branch (7), or
∘ a second switching state which bidirectionally conducts current both in the first current flow direction (201) and in a second current flow direction (202) from the second vehicle electrical distribution system branch (7) to the first vehicle electrical distribution system branch (2);
- between the first vehicle electrical distribution system branch (2) and the second vehicle electrical distribution system branch (7), a DC-to-DC converter (9) and a second controllable switching device (12) in a series connection in parallel with the first switching device (11),
- wherein the first vehicle electrical distribution system branch (2) has a first energy store (3),
- the DC-to-DC converter (9) is implemented to charge the first energy store (3) of the first vehicle electrical distribution system branch (2) with current from the second vehicle electrical distribution system branch (7), and
- the second switching device (12) is implemented to take on:
∘ a first switching state which unidirectionally conducts current only in a first current flow direction (203) from the second vehicle electrical distribution system branch (7) to the first vehicle electrical distribution system branch (2), or
∘ a second switching state which bidirectionally conducts current both in the first current flow direction (203) and in a second current flow direction (204) from the first vehicle electrical distribution system branch (2) to the second vehicle electrical distribution system branch (7); **characterized in that** the vehicle electrical distribution system (1) also has:
- a third vehicle electrical distribution system branch (5),
- between the DC-to-DC converter (9) and the third vehicle electrical distribution system branch (5), a third controllable switching device (13) which is implemented to take on:
∘ a first switching state which unidirectionally conducts current only in a first current flow direction (205) from the third vehicle electrical distribution system branch (5) to the DC-to-DC converter (9), or
∘ a second switching state which bidirectionally conducts current both in the first current flow direction (205) and in a second current flow direction (206) from the DC-to-DC converter (9) to the third vehicle electrical distribution system branch (5) ;
- the third vehicle electrical distribution system branch (5) has a third energy store (6), and
- the DC-to-DC converter (9) is also implemented to charge the first energy store (3) of the first vehicle electrical distribution system branch (2) with current from the third energy store (6) of the third vehicle electrical distribution system branch (5), and/or vice versa.

2. Vehicle electrical distribution system (1) according to Claim 1, in which
- at least one of the first (11), the second (12) and the third (13) switching devices comprises a semiconductor transistor and a diode,
- wherein the semiconductor transistor and the diode are connected in parallel with one another.

3. Vehicle electrical distribution system (1) according to Claim 2, in which the at least one switching device (11, 12, 13) comprises a MOSFET switch having a body diode.

4. Vehicle electrical distribution system (1) according to any of the preceding claims, in which the first consumer (4) is designed as a starter for starting an internal combustion engine of the vehicle (100).

5. Vehicle electrical distribution system (1) according to any of the preceding claims, in which the DC-to-DC converter (9) is designed as a controllable bidirectional DC-to-DC converter.

## Revendications

1. Réseau de bord (1) pour un véhicule (100), comprenant :
- une première branche de réseau de bord (2), la première branche de réseau de bord (2) possédant un premier récepteur électrique (4) dynamique,
- une deuxième branche de réseau de bord (7), la deuxième branche de réseau de bord (7) possédant un deuxième récepteur électrique (8) sensible,
- un premier dispositif de commutation (11) commandable disposé entre la première (2) et la deuxième (7) branche de réseau de bord, lequel est conçu pour adopter
∘ un premier état de commutation à conduction de courant unidirectionnelle seulement dans un premier sens de circulation du courant (201) de la première branche de réseau de bord (2) vers la deuxième branche de réseau de bord (7), ou
∘ un deuxième état de commutation à conduction de courant bidirectionnelle à la fois dans le premier sens de circulation du courant (201) et dans un deuxième sens de circulation du courant (202) de la deuxième branche de réseau de bord (7) vers la première branche de réseau de bord (2) ;
- entre la première branche de réseau de bord (2) et la deuxième branche de réseau de bord (7), un convertisseur CC/CC (9) et un deuxième dispositif de commutation (12) commandable dans un circuit série en parallèle avec le premier dispositif de commutation (11),
- la première branche de réseau de bord (2) possédant un premier accumulateur d'énergie (3),
- le convertisseur CC/CC (9) est réalisé pour charger le premier accumulateur d'énergie (3) de la première branche de réseau de bord (2) avec du courant de la deuxième branche de réseau de bord (7), et
- le deuxième dispositif de commutation (12) est conçu pour adopter
∘ un premier état de commutation à conduction de courant unidirectionnelle seulement dans un premier sens de circulation du courant (203) de la deuxième branche de réseau de bord (7) vers la première branche de réseau de bord (2), ou
∘ un deuxième état de commutation à conduction de courant bidirectionnelle à la fois dans le premier sens de circulation du courant (203) et dans un deuxième sens de circulation du courant (204) de la première branche de réseau de bord (2) vers la deuxième branche de réseau de bord (7) ;
**caractérisé en ce que** le réseau de bord (1) possède en outre :
- une troisième branche de réseau de bord (5),
- entre le convertisseur CC/CC (9) et la troisième branche de réseau de bord (5), un troisième dispositif de commutation (13) commandable qui est conçu pour adopter
∘ un premier état de commutation à conduction de courant unidirectionnelle seulement dans un premier sens de circulation du courant (205) de la troisième branche de réseau de bord (5) vers le convertisseur CC/CC (9), ou
∘ un deuxième état de commutation à conduction de courant bidirectionnelle à la fois dans le premier sens de circulation du courant (205) et dans un deuxième sens de circulation du courant (206) du convertisseur CC/CC (9) vers la troisième branche de réseau de bord (5) ;
- la troisième branche de réseau de bord (5) possède un troisième accumulateur d'énergie (6) et
- le convertisseur CC/CC (9) est en outre réalisé pour charger le premier accumulateur d'énergie (3) de la première branche de réseau de bord (2) avec du courant du troisième accumulateur d'énergie (6) de la troisième branche de réseau de bord (7) et/ou inversement.

2. Réseau de bord (1) selon la revendication 1, avec lequel
- au moins l'un parmi le premier (11), le deuxième (12) et le troisième (13) dispositif de commutation comporte un transistor semiconducteur et une diode,
- le transistor semiconducteur et la diode sont branchés en parallèle l'un avec l'autre.

3. Réseau de bord (1) selon la revendication 2, avec lequel l'au mois un dispositif de commutation (11, 12, 3) comporte un commutateur à MOSFET pourvu d'une diode de body.

4. Réseau de bord (1) selon l'une des revendications précédentes, avec lequel le premier récepteur (4) est réalisé sous la forme d'un démarreur servant à démarrer un moteur à combustion interne du véhicule (100).

5. Réseau de bord (1) selon l'une des revendications précédentes, avec lequel le convertisseur CC/CC (9) est réalisé sous la forme d'un convertisseur de courant continu bidirectionnel.
